Europäisches Patentamt

(19) European Patent Office (11) Publication number: **0 138 380**

Office européen des brevets **B1**

(12) **EUROPEAN PATENT SPECIFICATION**

(45) Date of publication of patent specification: **03.06.87** (51) Int. Cl.⁴: **B 05 B 7/04,** B 05 B 7/28,
.A 01 M 7/00

(21) Application number: **84306246.4**

(22) Date of filing: **12.09.84**

(54) Spraying device.

(30) Priority: **19.09.83 GB 8324976**

(43) Date of publication of application:
**24.04.85 Bulletin 85/17**

(45) Publication of the grant of the patent:
**03.06.87 Bulletin 87/23**

(84) Designated Contracting States:
**AT BE CH DE FR GB IT LI LU NL SE**

(56) References cited:
**GB-A- 965 224**
**US-A-3 032 274**
**US-A-3 727 841**
**US-A-4 369 921**

(73) Proprietor: **Phostrogen Limited**
**Corwen**
**Clwyd Wales (GB)**

(72) Inventor: **Cessford,.Alan Charles**
**Cherry Tree Farmhouse**
**Llangollen Clwyd Wales (GB)**
Inventor: **James, Michael**
**28, Shillington Road**
**Pirton Hertfordshire (GB)**

(74) Representative: **Godwin, Edgar James et al**
**MARKS & CLERK 57-60 Lincoln's Inn Fields**
**London, WC2A 3LS (GB)**

**0 138 380**

## Description

This invention relates to a device for spraying a liquid, soluble powder, or other flowable material, diluted with water, as set out in the preamble of claim 1.

Known forms of such a device (GB—A—965 224 and US—A—3 032 274) have a spraying head which is fitted on the mouth of a specially designed container; a water inlet end of the device communicates with a bore for forming a jet of water directed across an orifice communicating with liquid in the container via a duct, the resulting suction drawing the liquid into the jet of water. The container is held in the hand and therefore is necessarily of limited size (up to about 1 litre) and is rapidly emptied, typically in 2 to 3 minutes. Because of the frequent re-filling required, the known device is hardly a labour-saving one.

The present invention provides a device for spraying a flowable material diluted with water comprising a spraying head having a water inlet end which is connectible to a source of water under pressure, a bore communicating with the water inlet end for forming the water into a jet, and an orifice across which the water is directed by the bore to cause a reduction in pressure in the orifice, means for connecting the spraying head to a container, and a flexible tube connected to the said orifice and extending into the container, the invention being characterised by the connecting means comprising clamping means for connecting the head to a spout on a container for the flowable material, the clamping means comprising relatively movable clamping members between which the spout is to be clamped, and the flexible tube being insertable through the clamping means and the spout.

The container may conveniently be a watering can. Alternatively it may be a container with a spigot serving as a spout.

A watering can may, for example, contain 10 litres of liquid (typically a concentrated aqueous solution or suspension) and is easily carried. Alternatively it can be left standing on the ground, e.g. for lawn treatment.

Most conventional dilutors, as well as emptying the liquid container very rapidly, are wildly inaccurate in their degree of dilution, this being affected to a considerable extent by variations in pressures and flow rates. However, through considerable experimental research we have surprisingly found that, by suitably selecting the design of the spraying head, it is possible to achieve accurate dilution (within ± 10% of the desired value) over a wide range of water pressures.

The spraying head preferably includes an on-off valve interposed in the bore. The head may also include operable means for disrupting the jet so that it causes substantially no pressure reduction in the orifice.

The on-off valve may be adapted to constitute such means.

Further optional and preferred features are defined in the claims.

The invention will be described further, by way of example, with reference to the accompanying drawings, in which:

Figure 1 is a fragmentary side view of a spraying device on the spout of a watering can;

Figure 2 is an exploded perspective view of the device;

Figure 3 is a fragmentary, part-sectioned side view of the device;

Figure 4 is a fragmentary horizontal section through part of the device;

Figure 5 is a part-sectioned plan view of the inner body of the device;

Figure 6 is an end view of the inner body;

Figure 7 is a vertical axial section through the inner body;

Figure 8 is an enlarged section through one end of the inner body;

Figure 9 is a plan view of the spraying head of the device;

Figure 10 is a fragmentary perspective view of the spraying head; and

Figure 11 is a sectioned enlarged view of the detail A in Figure 10.

The spraying device illustrated comprises a spraying head 1 having an inner body 2 and an outer body 3. The head 1 has a water inlet end provided with a screw ring 4, for connection to a hose which is connected in turn to a water tap usually supplied with water at mains pressure. The water inlet end communicates with a tapering bore 6 having an inlet section 6a of 8 mm diameter and an outlet section 6b of 4 mm diameter, between which is interposed an on-off valve member 7 provided with O-rings 8. A valve control knob 9 projects from the head.

The bore 6 forms a jet of water which discharges into a cavity 31 delimited by the inner and outer bodies 2, 3. The cavity 31 is open at the top and at the front and its base is formed by a member 12 which is an integral part of the inner body 2 and which is spaced from the outlet end of the bore 6. The upper surface of the member 12 includes a bed 11 which is to be impinged upon by the water jet and which is at an angle of 10° to the axis of the bore 6. At its front (i.e. downstream) end the upper surface of the member 12 has a shallow ramp 32 which begins slightly below the front edge of the bed 11 but which rises more steeply, at 15° to the axis of the bore 6. (Alternatively, the ramp 32 may simply be constituted by a continuation of the bed 11 at the same angle, i.e. 10°).

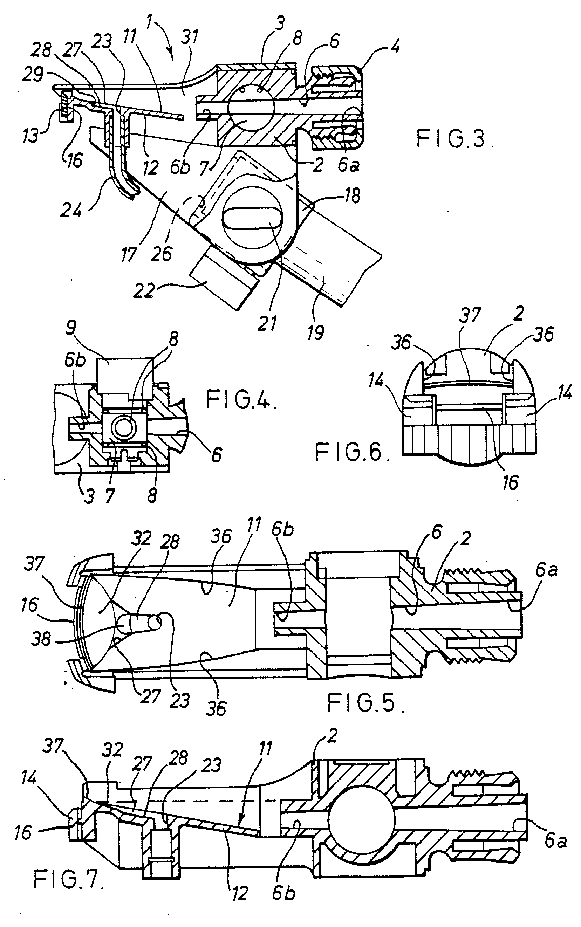

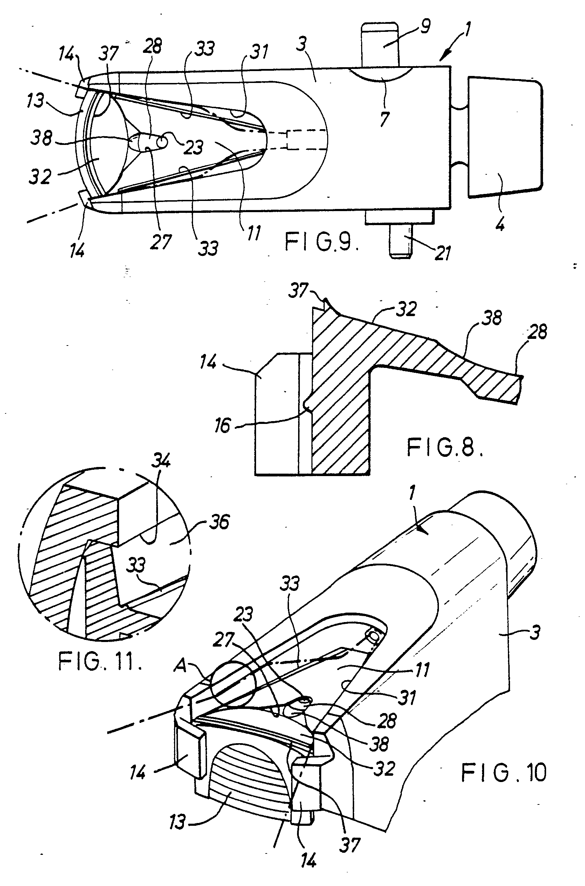

The jet of water flows across the bed 11 and the shallow ramp 32 while spreading sideways, and leaves the front of the cavity 31 as a diverging spray. The water flow is indicated in outline by the chain-dotted lines in Figures 9 and 10. Spreading of the flow towards the sidewalls of the cavity 31 can be limited as shown in Figures 9 to 11 by forming longitudinal beads 33 on the bed 11. Any tendency for the sideways

2

flow to escape over the sidewalls can be prevented by making the outer body 3 overhang the sides 36 of the inner body 2 to provide inwardly projecting ledges 34 as shown in Figure 11. Also, as shown in Figure 5, the sides 36 of the inner body 2, delimiting the cavity 31, are made slightly convex so that any sideways flow of water is redirected towards the axial direction.

There is a tendency for the flow of water to cling to the shallow ramp 32 and to dribble from the front of the cavity 31. This can be counteracted by providing a deflection bead or ridge 37 extending over the full width of the ramp 32 adjacent its downstream edge. The ridge 37 lifts the flow out of contact with the ramp 32.

The water leaves the downstream end of the cavity 31 as a spray whose characteristics can be altered by raising or lowering a removable disrupter or spoiler 13 which is retained by lateral clips 14 integral with the inner body 2 and which is located by a transverse rib 16 on the body 2 selectively engaged in slots in the spoiler 13. The upper edge of the spoiler 13 is bevelled, preferably at 40°, and is either level or rises towards the middle.

The outer body 3 has two side-walls 17, between which is mounted a shroud 18 which is capable of being fitted on the end of the spout 19 of a conventional watering can or a container with a spout or spigot and held there by a clamping screw 22. The outer body 3 is pivotable on the shroud 18 and can be locked at the desired angle by a nut 21. An orifice 23 in the member 12 communicates with a flexible tube 24, approximately 50 to 80 cm long, which can be passed through a slot 26 in the shroud 18 and down the spout 19 into the flowable material contained in the watering can. The flow of water across the orifice 23 causes a pressure reduction which draws the flowable material up the tube 24 (Venturi action). The diameter of the orifice 23 is 3 mm.

The orifice 23 is at the upstream end of a Y-shaped recess 27 which widens in the downstream direction and merges with the shallow ramp 32. The narrow section of the recess 27 has a base 28 which is parallel to the bed 11. The downstream end of the base 28 merges with a concave dimple 38 in the middle of the wider section of the recess 27, this wider section rising towards the shallow ramp 32. The dimple 38 assists in maximising suction in the recess 27 above the orifice 23. The Y shape of the recess 27 spreads the material emerging from the orifice 23, thereby distributing the material throughout the width of the spray.

It has been found that the effect of the deflection ridge 37, and of the spoiler 13 if it is in the raised position, is not only to assist in breaking the flow up into droplets but also to direct the spray upwards giving greater ground coverage. The ridge 37 also overcomes any problem of sealing between the slidable spoiler 13 and the body 2, since the ridge 37 causes the flow to jump any gap existing between spoiler and body. ·

The spraying head described above has been designed to give an acceptably accurate (in horticultural terms) 50 gallons (227 litres) of solution spray from 2 gallons (9 litres) of concentration solution in a running time of up to half an hour. With the optimum features given below it has been found possible to achieve this substantially independently of water supply pressure variations (within the normal range) and depth of concentrated solution in the watering can. The effect of the gradual decrease in depth on the pressure in the tube 24 is made negligible by maximising the suction due to the Venturi action.

The tapering of the bore 6 accelerates the water jet and thereby enhances the Venturi action. The dimension of the outlet section 6b is critical; the optimum diameter is 4 mm. A decrease in diameter has a marked adverse effect on the Venturi action; below 3.5 mm the Venturi action may be insufficient to draw the concentrate up the tube 24. Above 4.5 mm much of the water jet jumps the Venturi area without effect.

The angle at which the water jet strikes the bed 11 is also critical with regard to maximising suction. The optimum angle of the bed 11 relative to the axis of the bore 6 has been found to be 10°. In the optimum arrangement, the axis of the bore 6 meets the bed 22 mm downstream of the outlet section 6b and 13 mm upstream of the axis of the orifice 23 (measured along the axis of the bore 6).

Once suction has been maximised, the flow of concentrate can be made substantially constant (independent of the level in the watering can) by using the orifice 23 (and the bore of the tube 24) as a restrictor. The optimum diameter of the orifice 23 has been found to be 3 mm, although diameters up to 4 mm can also be used reasonably satisfactorily.

The concave dimple 38 downstream of the orifice 23 has been found to be vital to the creation of maximum suction. The Y shape of the recess not only assists in spreading the concentrate throughout the width of the spray but also assists in the achievement of the desired dilution ratio (50 gallons of solution per 2 gallons of concentrate); if the arms of the Y are closed, the amount of solution made falls below 50 gallons, whatever the water supply pressure.

The optimum arrangement described above has been found experimentally to give the following results with a can containing 2 gallons (9 litres) of concentrate.

| Water Pressure psi (kPa) | Volume Produced gallons (litres) | Time |
|---|---|---|
| 25 (170) | 53.5 (243) | 22 min 30 s |
| 35 (240) | 50.5 (230) | 18 min 30 s |
| 45 (310) | 50.5 (230) | 15 min |
| 60 (410) | 50.5 (230) | 14 min |
| 90 (620) | 46.0 (209) | 13 min 13 s |

Thus, although the operation of the spraying device as a dilutor is affected by variations in water pressure, it has been found that such variations affect the running time (time to empty the watering can) rather than the degree of dilution of the sprayed mixture. From about 30 psi (about 200 kPa) upwards, the dilution is remarkably accurate. At 25 psi (170 kPa), an abnormally low pressure, the tendency is for the dilution ratio to increase slightly. At 90 psi (620 kPa), an abnormally high pressure, the dilution ratio decreases slightly.

Because of its accurate slow rate of dilution, the spraying device is exceptionally economical in its consumption of liquid, such as fertilizer solution. There is no need to return to a mains tap every few minutes to refill a watering can or a small container of solution. The flow of water can be turned off at the spraying device. By adjusting the position of the spoiler 13 one can obtain coarse droplets for root feeding or finer droplets for foliar feeding. The spraying head can be tilted down to localise the spray or up for foliar feeding of high shrubs or trees. The watering can may be hand held or placed on the ground and allowed to operate unattended.

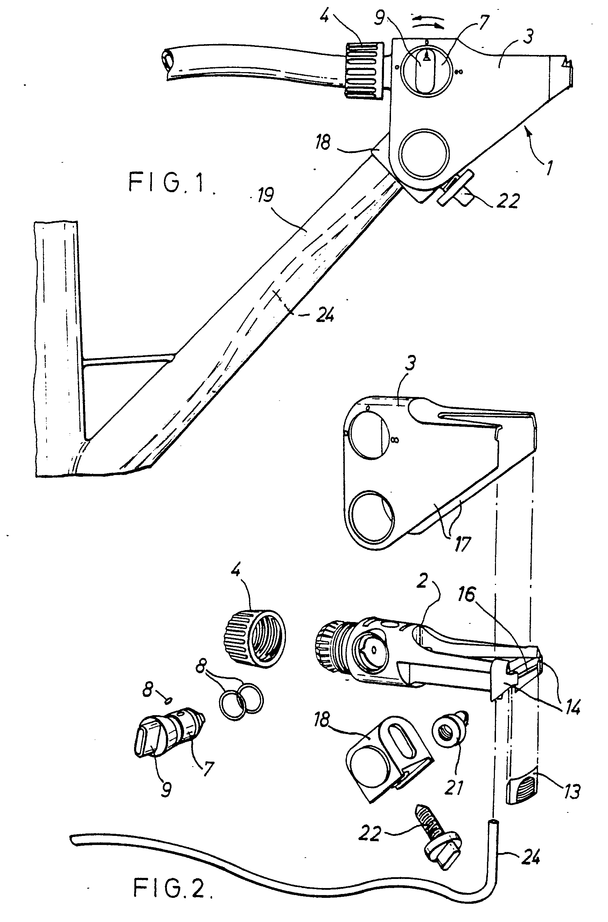

The position of the valve member 7 shown in Figure 1 is located by a shoulder on the knob 9 cooperating with a stop on the body 2. In this position the peripheral wall of the bore of the valve member 7 is aligned with the peripheral wall of each of the bore sections 6a, 6b and a solid water jet leaves the bore axially to strike the surface 11 upstream of the orifice 23. If the knob 9 is turned through about 90° the water flow is cut off. If, however, the knob 9 is turned through about 180° to a position located by a second shoulder on the knob cooperating with a stop on the body 2, the bore of the valve member 7 is reversed so that its peripheral wall is out of alignment with the peripheral walls of the bore sections 6a, 6b, with the result that the water jet is disrupted and causes substantially no pressure reduction in the orifice 23, so no flowable material is drawn up through the tube 24.

**Claims**

1. A device for spraying a flowable material diluted with water, comprising a spraying head (1) having a water inlet end which is connectible to a source of water under pressure, a bore (6) communicating with the water inlet end for forming the water into a jet, and an orifice (23) across which the water is directed by the bore (6) to cause a reduction in pressure in the orifice (23), means for connecting the spraying head (1) to a container, and a flexible tube (24) connected to the said orifice (23) and extending into the container, characterised in that the said connecting means comprises clamping means for connecting the head (1) to a spout (19) on a container for the flowable material the clamping means comprising relative movable clamping members (18, 22) between which the spout (19) is to be clamped, and the flexible tube (24) being insertable through the clamping means and the spout (19).

2. A device as claimed in claim 1, in which the spraying head (1) comprises sidewalls and a base member delimiting a cavity (31) into which the bore (6) discharges, the upper surface of the base member including a bed (11) which slopes upwards in the downstream direction, the orifice (23) being at the upstream end of a recess (27) in the bed (11).

3. A device as claimed in claim 2, in which the recess (27) is Y shaped and widens in the downstream direction.

4. A device as claimed in claim 2 or 3, in which the downstream end portion of the upper surface of the base member includes a shallow ramp (32) which slopes upwards in the downstream direction.

5. A device as claimed in claim 4, in which the ramp (32) slopes more steeply than the bed (11).

6. A device as claimed in claim 5, in which the upstream edge of the ramp (32) is below the downstream edge of the bed (11).

7. A device as claimed in any of claims 4 to 6, in which the base of the recess (27) in the bed (11) has an upstream section (28) parallel with the bed (11) and a downstream section which rises to the upstream edge of the ramp (32) and which comprises a concave dimple (38).

4

8. A device as claimed in any of claims 2 to 7, in which the outlet section (6b) of the bore (6) has a diameter of 3.5 to 4.5 mm.

9. A device as claimed in claim 8, in which the said diameter is 4 mm.

10. A device as claimed in any of claims 2 to 7, in which the orifice (23) has a diameter of 3 to 4 mm.

11. A device as claimed in any of claims 2 to 7, in which the orifice (23) has a diameter of 3 mm.

12. A device as claimed in any of claims 2 to 7, in which the orifice (23) has a diameter of 4 mm.

13. A device as claimed in any of claims 2 to 12, in which the upper surface of the base member has a ridge (37) extending over the full width of the cavity (31) adjacent the downstream end of the cavity.

14. A device as claimed in any of claims 2 to 13, including a spoiler (13) mounted beyond the downstream end of the cavity (31) so as to be movable up and down.

15. A device as claimed in claim 14, in which the spoiler (13) extends over the full width of the downstream end of the cavity (31).

16. A device as claimed in any of claims 2 to 15, in which the bed (11) is at an angle of 10° to the axis of the bore (6).

17. A device as claimed in any of claims 2 to 16, including operable means for disrupting the water jet so that it causes substantially no pressure reduction in the orifice (23).

18. A device as claimed in claim 17, in which the said means comprises a valve member (7) which crosses the jet-forming bore (6), the valve member (7) being movable between a position in which the peripheral wall of a bore in the valve member (7) is aligned with the peripheral wall of the jet-forming bore (6) and a position in which the peripheral wall of the bore in the valve member (7) is out of alignment with the peripheral wall of the jet-forming bore (6) while allowing water to flow along the jet-forming bore (6) through the bore in the valve member (7).

19. A device as claimed in claim 18, in which the valve member (7) is movable to a further position in which it blocks the flow of water along the jet-forming bore (6).

20. A device as claimed in any of claims 2 to 19, in which the bed (11) has longitudinal beads (33) adjacent the respective sidewalls of the cavity (31).

21. A device as claimed in any of claims 2 to 20, in which each sidewall of the cavity (31) has a projecting ledge (34) spaced above the base member.

22. A device as claimed in any of claims 1 to 21, in which the spraying head (1) is pivotable relative to the clamping means.


**Patentansprüche**

1. Vorrichtung zum Versprühen eines fließfähigen mit Wasser verdünnten Materials mit einem Sprühkopf (1) mit einem Wassereinlaßende, welches verbindbar ist mit einer Quelle für unter Druck stehendes Wasser, einer mit dem Wassereinlaßende in Verbindung stehende Bohrung (6), um das Wasser in einen Strahl zu formen und einen Öffnung (23), über die das Wasser durch die Bohrung (6) geleitet wird, um eine Druckminderung in der Öffnung (23) hervorzurufen, Einrichtungen zum Verbinden des Sprühkopfs (1) mit einem Behälter sowie einem flexiblen Schlauch (24), der mit der Öffnung (23) verbunden ist und in den Behälter reicht, dadurch gekennzeichnet, daß diese Verbindungseinrichtung Klemmittel zum Verbinden des Kopfes (1) mit einem Stutzen (19) auf einem Behälter für das fließfähige Material, wobei die Klemmeinrichtung relativ bewegliche Klemmelemente (18, 22), zwischen denen der Stutzen (19) zu klemmen ist und der flexible Schlauch (24) durch die Klemmeinrichtung und den Stutzen (19) einführbar ist, umfabt.

2. Vorrichtung nach Anspruch 1, dadurch gekennzeichnet, daß der Sprühkopf (1) Seitenwandungen sowie ein einen Hohlraum (31) begrenzendes Basiselement umfaßt, in welches die Bohrung (6) austrägt, wobei die Oberfläche des Basiselementes ein Bett (11) umfaßt, welches schräg nach oben in Abströmrichtung verläuft, wobei die Öffnung (23) am anströmseitigen Ende einer Nut (27) im Bett (11) sich befindet.

3. Vorrichtung nach Anspruch 2, dadurch gekennzeichnet, daß die Nut (27) Y-förmig ausgebildet ist und sich in Abströmrichtung erweitert.

4. Vorrichtung nach Anspruch 2 oder 3, dadurch gekennzeichnet, daß der abströmseitige Endteil der Oberfläche des Basiselements eine flache Rampe (32) umfaßt, die nach oben in Abströmrichtung schräg zuläuft.

5. Vorrichtung nach Anspruch 4, dadurch gekennzeichnet, daß die Rampe (32) steiler als das Bett (11) zuläuft.

6. Vorrichtung nach Anspruch 5, dadurch gekennzeichnet, daß die Anströmkante der Rampe (32) unterhalb der Abströmkante des Bettes (11) sich befindet.

7. Vorrichtung nach einem der Ansprüche 4 bis 6, dadurch gekennzeichnet, daß die Basis der Nut (27) im Bett (11) einen anströmseitigen Abschnitt (28) parallel zum Bett (11) sowie einen abströmseitigen Abschnitt aufweist, der zur Anströmkante der Rampe (32) ansteigt und über eine konkave Vertiefung (38) verfügt.

8. Vorrichtung nach einem der Ansprüche 2 bis 7, dadurch gekennzeichnet, daß der Auslaßabschnitt (6b) der Bohrung (6) einen Durchmesser von 3,5 bis 4,5 mm besitzt.

9. Vorrichtung nach Anspruch 8, dadurch gekennzeichnet, daß der Durchmesser 4 mm beträgt.

10. Vorrichtung nach einem der Ansprüche 2 bis 7, dadurch gekennzeichnet, daß die Öffnung (23) einen Durchmesser von 3 bis 4 mm aufweist.

11. Vorrichtung nach einem der Ansprüche 2 bis 7, dadurch gekennzeichnet, daß die Öffnung (23) einen Durchmesser von 3 mm hat.

12. Vorrichtung nach einem der Ansprüche 2 bis 7, dadurch gekennzeichnet, daß die Öffnung (23) einen Durchmesser von 4 mm hat..

13. Vorrichtung nach einem der Ansprüche 2 bis 12, dadurch gekennzeichnet, daß die Oberfläche des Basis-elements eine Rippe (37) aufweist, die sich über die volle Breite der Ausnehmung (31) benachbart dem abströmseitigen Ende der Ausnehmung erstreckt.

14. Vorrichtung nach einem der Ansprüche 2 bis 13, mit einem Spoiler (13), der hinter dem abströmseitigen Ende der Vertiefung (31) angebracht und auf und ab beweglich ist.

15. Vorrichtung nach Anspruch 14, dadurch gekennzeichnet, daß der Spoiler (13) sich über die volle Breite des abströmseitigen Endes der Vertiefung (31) erstreckt.

16. Vorrichtung nach einem der Ansprüche 2 bis 15, dadurch gekennzeichnet, daß das Bett (11) sich unter einem Winkel von 10° zur Achse der Bohrung (6) erstreckt.

17. Vorrichtung nach einem der Ansprüche 2 bis 16, mit betätigbaren Einrichtungen zum Unterbrechen des Wasserstrahls, derart, daß er im wesentlichen keine Druckverminderung in der Öffnung (23) hervorruft.

18. Vorrichtung nach Anspruch 17, dadurch gekennzeichnet, daß diese Einrichtung ein Ventilelement (7) umfaßt, welches die strahlbildende Bohrung (6) quert, wobei das Ventilelement (7) zwischen einer Stellung, in der die Umfangswandung einer Bohrung im Ventilelement (7) mit der Umfangswandung der strahlbildenden Bohrung (6) ausgerichtet ist und einer Stellung beweglich ist, in der die Umfangswandung der Bohrung im Ventilelement (7) außer Ausrichtung mit der Umfangswandung der strahlbildenden Bohrung (6) steht, während Wasser längs der strahlbildenden Bohrung (6) durch die Bohrung im Ventilelement (7) strömen kann.

19. Vorrichtung nach Anspruch 18, dadurch gekennzeichnet, daß das Ventilelement (7) in eine weitere Stellung bewegbar ist, in der es die Wasserströmung längs-der strahlbildenden Bohrung (6) blockiert.

20. Vorrichtung nach einem der Ansprüche 2 bis 19, dadurch gekennzeichnet, daß das Bett (11) in Längsrichtung verlaufende Wulstausbildungen (33) benachbart den jeweiligen Seitenwandungen der Ausnehmung (31) aufweist.

21. Vorrichtung nach einem der Ansprüche 2 bis 20, dadurch gekennzeichnet, daß jede Seitenwand der Ausnehmung (31) über einen vorstehenden Leistenteil (34) unter Abstand oberhalb des Basiselements verfügt.

22. Vorrichtung nach einem der Ansprüche 1 bis 21, dadurch gekennzeichnet, daß der Sprühkopf (1) relativ zu den Klemmeinrichtugen verschwenkbar ist.


**Revendications**

1. Dispositif pour pulvériser un matériau fluide dilué avec de l'eau, comportant une tête de pulvérisation (1) ayant une extrémité d'entrée d'eau pouvant être raccordée à une source d'eau sous pression, un alésage (6) communiquant avec l'extrémité d'entrée d'eau pour former un jet avec l'eau, et un orifice (23) en travers duquel l'eau est dirigée par l'alésage (6) pour provoquer une diminution de pression dans cet orifice (23), des moyens pour assembler la tête de pulvérisation (1) avec un récipient, ainsi qu'un tube flexible (24) raccordé audit orifice (23) et s'étendant dans le récipient, caractérisé en ce que lesdits moyens d'assemblage comportent des moyens de serrage pour relier la tête (1) à un tuyau de sortic (19) du récipient de matériau fluide, les moyens de serrage comprenant des éléments de serrage (18, 22) deplaçables l'un par rapport à l'autre et entre lesquels le tuyau (19) doit être serré, et le tube flexible (24) pouvant être introduit dans les moyens de serrage et le tuyau (19).

2. Dispositif selon la revendication 1, dans lequel la tête de pulvérisation (1) comporte des parois latérales et un élément de base délimitant une cavité (31) dans laquelle débite l'alésage (6), la surface supérieure de l'élément de base formant un plateau (11) incliné vers le haut en direction de l'aval, l'orifice (23) étant à l'extrémité amont d'un logement (27) du plateau (11).

3. Dispositif selon la revendication 2, dans lequel le logement (27) est en forme de Y et s'élargit en direction de l'aval.

4. Dispositif selon la revendication 2 ou la revendication 3, dans lequel la partie d'extrémité aval de la surface supérieure de l'élément de base présente une rampe peu profonde (32) inclinée vers le haut en direction de l'aval.

5. Dispositif selon la revendication 4, dans lequel la rampe (32) a une inclinaison plus raide que le plateau (11).

6. Dispositif selon la revendication 5, dans lequel le bord amont de la rampe (32) est plus bas que l'extrémité aval du plateau (11).

7. Dispositif selon l'une quelconque des revendications 4 à 6, dans lequel le fond du logement (27) du plateau (11) présente une partie amont (28) parallèle au plateau (11) et une partie aval qui monte jusqu'au bord amont de la rampe (32) et qui comporte une cuvette concave (38). .

8. Dispositif selon l'une quelconque des revendications 2 à 7, dans lequel la partie de sortie (6b) de l'alésage (6) a un diamètre de 3,5 à 4,5 mm.

9. Dispositif selon la revendication 8, dans lequel ledit diamètre est de 4 mm.

10. Dispositif selon l'une quelconque des revendications 2 à 7, dans lequel l'orifice (23) a un diamètre de 3 à 4 mm.

11. Dispositif selon l'une quelconque des revendications 2 à 7, dans lequel l'orifice (23) a un diamètre de 3 mm.

12. Dispositif selon l'une quelconque des revendications 2 à 7, dans lequel l'orifice (23) a un diamètre de 4 mm.

13. Dispositif selon l'une quelconque des revendications 2 à 12, dans lequel la surface supérieure de l'élément de base présente une nervure (37) s'étendant sur toute la largeur de la cavité (31) au voisinage de l'extrémité aval de la cavité.

14. Dispositif selon l'une quelconque des revendications 2 à 13, comprenant un déflecteur (13) monté au delà de l'extrémité aval de la cavité (31) de manière à pouvoir être déplacé vers le haut et vers le bas.

15. Dispositif selon la revendication 14, dans lequel le déflecteur (13) s'étend sur toute la largeur de l'extrémité aval de la cavité (31).

16. Dispositif selon l'une quelconque des revendications 2 à 15, dans lequel le plateau (11) fait un angle de 10° avec l'axe de l'alésage (6).

17. Dispositif selon l'une quelconque des revendications 2 à 16, comportant des moyens pouvant être actionnés pour briser le jet d'eau de manière qu'il ne produise pas de réduction sensible de pression dans l'orifice (23).

18. Dispositif selon la revendication 17, dans lequel lesdits moyens comportent un organe formant vanne (7) traversant l'alésage (6) de formation du jet, cet organe formant vanne (7) pouvant être déplacé entre une position dans laquelle la paroi latérale d'un alésage de l'organe formant vanne (7) est un alignement avec la paroi latérale de l'alésage (6) de formation du jet et une position dans laquelle la paroi latérale de l'alésage de l'organe formant vanne (7) est en dehors de l'alignement avec la paroi latérale de l'alésage (6) de formation de jet tout en permettant l'écoulement de l'eau dans l'alésage (6) de formation du jet à travers l'alésage de l'organe formant vanne (7).

19. Dispositif selon la revendication 18, dans lequel l'organe formant vanne (7) peut être déplacé dans une autre position dans laquelle il arrête l'écoulement de l'eau dans l'alésage (6) de formation du jet.

20. Dispositif selon l'une quelconque des revendications 2 à 19, dans lequel le plateau (11) présente des nervures longitudinales (33) adjacentes aux parois latérales correspondantes de la cavité (31).

21. Dispositif selon l'une quelconque des revendications 2 à 20, dans lequel chaque paroi latérale de la cavité (31) comporte une corniche en saillie (34) à une certaine distance au dessus de l'élément de base.

22. Dispositif selon l'une quelconque des revendications 1 à 21, dans lequel la tête de pulvérisation (1) est pivotante par rapport aux moyens de serrage.

0 138 380

FIG.1.

FIG.2.

1

0 138 380

FIG.3.

FIG.4.

FIG.6.

FIG.5.

FIG.7.

FIG.9.

FIG.8.

FIG. 11.

FIG.10